# EUROPÄISCHE PATENTSCHRIFT

(11) **EP 1 639 525 B1**
(45) Veröffentlichungstag und Bekanntmachung des Hinweises auf die Patenterteilung: **19.11.2008**
(21) Anmeldenummer: 99932816.4
(22) Anmeldetag: 05.07.1999
(51) Int. Cl.: G06K 19/07, G06K 19/077, G06K 19/18

(54) **ELEKTRONISCHE ERKENNUNGSMARKE**
ELECTRONIC IDENTIFICATION TAG
PLAQUE D'IDENTITE ELECTRONIQUE

(30) Priorität: 31.07.1998 DE 19834515
(43) Veröffentlichungstag der Anmeldung: 29.03.2006
(73) Patentinhaber: Deutsche Telekom AG, 53113 Bonn (DE)
(72) Erfinder: HEBBECKER, Werner, D-90449 Nürnberg (DE)
(86) Internationale Anmeldenummer: PCT/EP1999/004658
(87) Internationale Veröffentlichungsnummer: WO 2000/008597

(56) Entgegenhaltungen:
- DE-U- 29 517 165
- DE-U- 29 519 644
- FR-A- 2 753 291
- GB-A- 2 203 699
- US-A- 5 191 608
- US-A- 5 452 431
- US-A- 5 528 222

## Beschreibung

Die Erfindung betrifft eine elektronische Erkennungsmarke für Personen nach dem Oberbegriff des Patentanspruchs 1.

Erkennungsmarken für Personen sind grundsätzlich bekannt. So tragen zum Beispiel Soldaten und angehörige ähnlicher Organisationen, wie zum Beispiel Miliz, Gendarmerie, Grenzschutz, Heimatschutz, Landsturm ständig, das heißt Tag und Nacht, derartige Erkennungsmarken, das heißt einen Datenträger mit jeweils auf die Person bezogenen Daten. Insbesondere führen Soldaten Erkennungsmarken mit, die derzeit aus Blech mit zwei symmetrisch angeordneten Hälften bestehen, die durch eine Sollbruchrille trennbar sind. Diese Marke kann an einer Kette um den Hals getragen werden. Als Daten werden die Nationalität, die Personenkennziffer und die Blutgruppe jeweils in die beiden Hälften eingeprägt. Im Todesfall wird die eine Hälfte abgebrochen und dient zur Identifizierung der jeweiligen Person; die andere Hälfte verbleibt am Körper. Materialauswahl und die dauerhafte Tiefprägung der genannten Daten begründen sich aus der Tatsache, daß die Erkennungsmarke auch unter härtesten Bedingungen und noch nach Jahren, zum Beispiel im agressiven Erdreich bei Bedarf Auskunft über die betreffende Person geben muß.

Die auf einer solchen herkömmlichen Erkennungsmarke gespeicherten Daten sind für eine moderne, volltechnische Armee nicht mehr ausreichend. In allen modernen Streitkräften wird zunehmend auch der Soldat, wie zum Beispiel der Infanterist oder Jäger, als Teil eines Waffensystems oder bereits als eigenständiges Waffensystem betrachtet. Das zeigt sich darin, daß er aufgrund spezieller Ausbildung und Ausrüstung in die Lage versetzt wird, im Einzelfall auch langfristig selbständig zu handeln und zu überleben. Die Informationen über die dem Soldaten zuteil gewordene Ausbildung, zum Beispiel Fallschirmausbildung, seine Befugnisse, zum Beispiel Führerschein, Kenntnisse, medizinische Disposition, zum Beispiel Impfungen und Allergien, liegen dezentral in verschiedenen Datenbeständen meist in Papierform vor und sind in kritischen Situationen nicht immer aktuell abrufbar. Gerade aber die Forderungen nach schneller Verfügbarkeit von Truppen, zum Beispiel die sogenannte Krisenreaktionskräfte der Bundeswehr, erfordern die Verfügbarkeit solcher Daten sofort vor Ort.

Aus der DE 295 19 644 U1 ist eine Vorrichtung bekannt, die personenbezogene Daten zweier Personen vergleicht. Die Vorrichtung kann dabei elektronisch ausgebildet sein und einen Halbleiterchip zum Speichern der personenbezogenen Daten aufweisen. Über eine in die Vorrichtung eingebettete Öffnung kann die Vorrichtung an einem Schlüsselbund befestigt werden.

Heutzutage haben sich auch Karten aus Kunststoff als Datenträger etabliert und werden als Identifikationskarte zur Personenidentifikation oder als Krankenversicherungskarte oder Kreditkarte mit und ohne Chip mit Kontakten und kontaktlos genutzt. Eine solche Karte und deren Verwendung ist zum Beispiel in der DE 196 48 767 A1 und in der DE 38 35 479 C2 beschrieben. Die Karten selbst sind aus Kunststoff und werden in einer Vielzahl von Ausführungen als Datenträger eingesetzt, wobei die Daten im wesentlichen in visuell nicht lesbarer Form auf Magnetstreifen, in optischer Codierung in Form eines Hologramms oder in einem Chip gespeichert werden. Daneben oder zusätzlich werden bei solchen Datenträgern auch visuell lesbare Daten, zum Beispiel als Hochprägung, Tiefprägung, Laserbeschriftung oder Barcode aufgebracht. Bei den Chipkarten werden die sogenannten Speicherchipkarten und intelligenten Chipkarten verwendet, wobei letztere noch mit einem Mikroprozessor oder programmierbaren logischen Arrays ausgerüstet ist. Diese auf derartigen Karten gespeicherten Daten werden zu vielfachen Zwecken verwendet. In der Mehrzahl der Fälle dienen sie dazu, den Nutzer gegenüber einem System als Berechtigten auszuweisen und den Zugang zu diesem System zu ermöglichen. Beispiele sind die Telefonkarte, die Kreditkarte, Zugangskarten zu Schließsystemen oder die Krankenversicherungskarte. Insbesondere in den beiden letzten Fällen werden auch personenbezogene Daten in den Speicher der Karte geschrieben. Derartige Karten mit magnetischen, optischen oder chipgestützten Speichern/Prozessoren sind zum Beispiel beschrieben in "Archiv für das Post- und Fernmeldewesen, 42. Jahrgang, Heft 3, August 1990" oder in "Der Fernmeldeingenieur, 43. Jahrgang, Heft 8/9, August/September 1989"

Eine derartige Karte ist beispielsweise in der DE 295 17 165 U1 offenbart. Es handelt sich hierbei um ein elektronisches Identifikationssystem mit berührungsloser elektronischer Informationsabfrage, um insbesondere in Notfallsituationen einem behandelnden Notarzt wichtige medizinische Informationen schnell und sicher mit einem klaren Identifikationsausweis zur Verfügung zu stellen.

Der Nachteil der bekannten Speicher- oder Mikroprozessorenchipkarten liegt darin, dass sie zwar viele Daten speichern können, jedoch als elektronische Erkennungsmarken für Personen mit Kompatantenstatus nicht geeignet sind.

Der Erfindung liegt deshalb die Aufgabe zugrunde, eine elektronische Erkennungsmarke für Personen mit Kompatantenstatus zu schaffen, die den Anforderungen von Militär, Miliz, Gendarmerie, Grenzschutz, Heimatschutz, Bergrettungsdienst und ähnlichen gerecht wird und die außerdem eine moderne Datenerfassung und -abgabe wie bei den heutigen Chip- bzw. Mikroprozessorkarten ermöglicht.

Die erfindungsgemäße Lösung der Aufgabe ist im Patentanspruch 1 aufgezeigt.

Weitere Lösungen bzw. Ausgestaltungen sind in den Patentansprüchen 2 bis 10 definiert.

Die elektronische Erkennungsmarke für Personen mit Kompatantenstatus ist entweder in Chipkartenform oder Erkennungsmarkenform ausgebildet und besteht aus zwei Teilen, die durch eine Sollbruchstelle trennbar sind. Die Sollbruchstelle kann dabei waagerecht, senkrecht oder schräg oder in einer Mäander- oder Wellenform ausgeführt sein. Es sind auch andere Gestaltungen, wie zum Beispiel eine Zick-Zack-Form möglich. Die Erkennungskarte bzw. -marke selbst kann entweder aus einem sehr widerstandsfähigen Kunststoff, Glas, Keramik oder ähnlichen bestehen, wobei der jeweilige Datenträger bzw. Speicher mit oder ohne Intelligenz in Form eines Chips, Magnetstreifens oder Hologramms eingebettet ist. Wichtig ist, daß auf beiden Teilen oder Seiten alle personenrelevanten Daten gespeichert sind. Dies kann einmal dadurch erfolgen, daß nur ein Teil oder eine Seite der Erkennungskarte bzw. -marke mit einem Chip ausgerüstet ist und die andere Seite nicht. Das heißt, daß auf der anderen Seite alle personenrelevanten Daten elektronisch abgespeichert sind und zumindestens auf der anderen Seite alle Daten nochmals visuell wahrnehmbar aufgebracht sind. Die Erkennungskarte oder -marke ist so gestaltet, daß sie hinsichtlich der Dauerhaftigkeit und Widerstandsfähigkeit gegen äußere Einflüsse den Anforderungen an eine Erkennungsmarke genügt, wobei insbesondere die besonderen Umgebungsbedingungen und Anforderungen an den in Aussicht genommenen Personenkreis und die Einsatzbedingungen berücksichtigt.

Die Speicher- bzw. Mikroprozessorchipstruktur der Erkennungskarte bzw. -marke erlaubt eine Verzeichnisstruktur von großer Flexibilität, so kann man zum Beispiel im Hauptverzeichnis globale Kartendaten wie Personenkennziffer, Nation, Name, Blutgruppe speichern, dann kann man in Datenfeldern des Hauptverzeichnisses zum Beispiel Zugangsberechtigungen speichern und in einem Unterverzeichnis zum Beispiel Ausbildung oder besondere Befähigungen und die Datenfelder der Unterverzeichnisse können wieder besondere bestimmte Anwendungen beinhalten. Bestimmte Daten bzw. Informationen, so zum Bespiel die Eröffnungsprozedur und das Übertragungsprotokoll können in einem ROM gespeichert sein und die Anwendungsdatenfelder können in einem EEPROM gespeichert werden, der auch einen Teil zur Aufnahme des/der Sicherheitsverfahren beinhalten kann. Von besonderer Bedeutung und vom besonderen Vorteil sind auch die Merkmale, daß die Daten kontaktlos geschrieben bzw. gelesen werden können. So können die Träger einer solchen Erkennungsmarke mit einem geeigneten Erfassungsgerät berührungslos erfaßt werden. Das ist besonders dann von Vorteil, wenn zum Beispiel viele Personen durch Waffeneinwirkung verletzt sind und zum Beispiel die medizinische Versorgung organisiert werden muß.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im folgenden anhand von in der Zeichnung dargestellten Ausführungsbeispielen näher beschreiben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: eine beispielhafte Verzeichnisstruktur einer Erkennungskarte bzw. -marke;
- Fig. 2a-e: verschiedene Ausführungsformen von Erkennungskarten bzw. marken;
- Fig. 3: den funktionellen Aufbau der elektronischen Erkennungsmarke bzw. -karte und
- Fig. 4: eine Speicherstruktur der elektronischen Erkennungsmarke bzw. -karte.

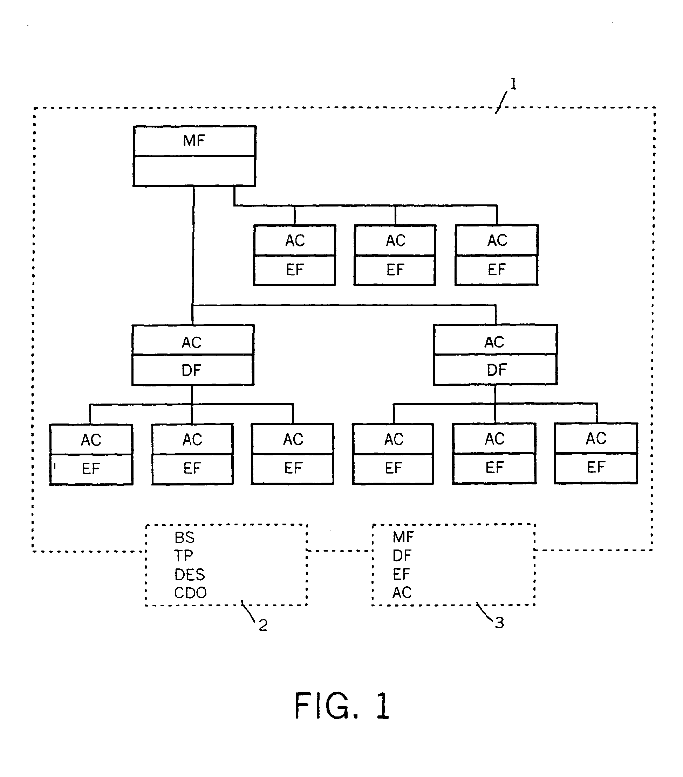

In Fig. 1 ist eine prinzipielle Verzeichnisstruktur der Erkennungskarte bzw. -marke durch eine gestrichelte Linie 1 umgeben, dargestellt.

Das Hauptverzeichnis MF enthält globale Kartendaten wie Personenkennziffer, Nation, Name und Blutgruppe. Selbstverständlich können auch ganz andere Daten für andere Anwendungen bzw. Zwecke im Hauptverzeichnis gespeichert werden. Das Hauptverzeichnis steht einmal mit Unterverzeichnissen DF, zum Beispiel links zum Speichern der Ausbildung der betreffenden Person und rechts zum Speichern von besonderen Befähigungen dieser Person, außerdem mit besonderen Datenfeldern des Hauptverzeichnisses MF, zum Beispiel Zugangsberechtigungen bzw. -bedingungen (AC) in Verbindung. Die Unterverzeichnisse DF sind ihrerseits wiederum über bestimmte Zugangsbedingungen AC mit bestimmten Datenfeldern und Speicherbereichen für Anwendungen verbunden.

Zur Steuerung und Übertragung ist ein Betriebssystem, ein Transportprotokoll TP, ein Sicherheitssystem DES und zum Beispiel Kommandos CDO in einem Speicher 2, der vorteilhafterweise als nur Nur-Lesespeicher ausgeführt ist, ausgestattet. Außerdem befindet sich der Anwendungsbereich mit dem Hauptverzeichnis MF, Unterverzeichnissen DF, Datenfeldern EF und Zugangsbedingungen AC in einem Lese/Schreibspeicher 3, insbesondere EEPROM. Die zu speichernden Daten beziehen sich nicht nur auf die Personenkennziffer PKZ u.s.w., sondern auch auf weitere personenbezogene Daten, wie zum Beispiel besondere Fähigkeiten, Ausbildung, Befugnisse, medizinischer Status u.s.w.. Sie können Bilder (Foto der Person) oder biometrische Signaturen, zum Bespiel DNA, enthalten.

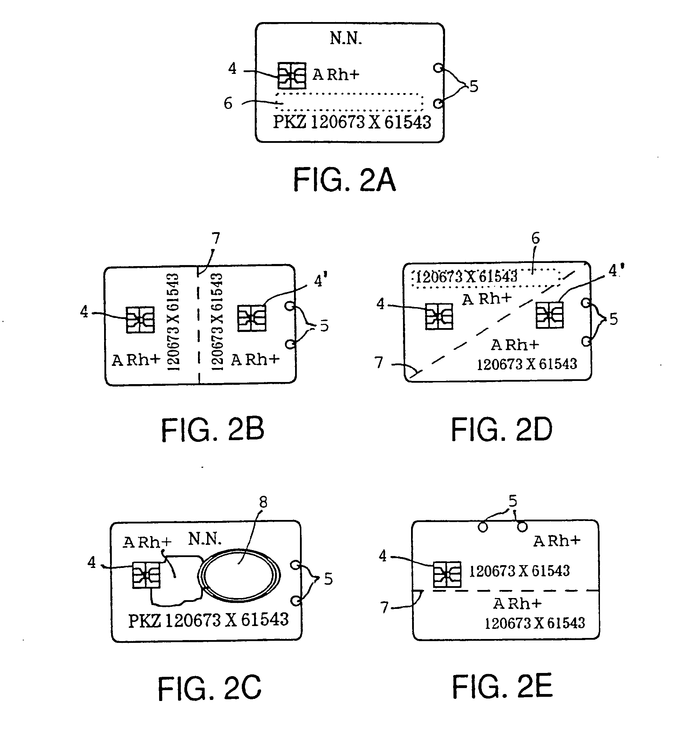

In Fig. 2a-e sind verschiedene Ausführungsformen von elektronischen Erkennungsmarken bzw. -karten dargestellt. Fig. 2a zeigt eine Erkennungsmarke bzw. -karte mit einem Chip 4 in dem zum Beispiel die Blutgruppe A Rh+ gespeichert ist. Außerdem besitzt die Karte zwei Löcher 5 zur Befestigung einer nicht dargestellten Halskette und einen optisch codierbaren Streifen 6 auf der Vorder-/Rückseite. Die Personenkennziffer wird einmal maschinenlesbar in den optisch oder magnetisch codierbaren Streifen 6 auf der Vorder-/Rückseite eingebracht und zum anderen lesbar auf der Karte durch eine visuell lesbare Hoch- oder Tiefprägung bzw. mittels Laser. Auf diese Art und Weise können zum Beispiel auch der Name und die Nation auf der Karte unzerstörbar aufgebracht werden.

Die in Fig. 2a gezeigte Karte ist ohne Sollbruchstelle dargestellt. Fig. 2a dient lediglich dazu, Beispiele für das Einbringen von Daten in die Karte/Marke zu illustrieren.

In Fig. 2b ist eine Erkennungsmarke mit einer senkrecht verlaufenden Sollbruchstelle 7 dargestellt. Beide Teile der hier dargestellten Erkennungsmarke sind spiegelbildlich aufgebaut und haben auch die gleichen Daten in gleicher Art und Weise gespeichert. Die integrierten bzw. eingebetteten Speicher- bzw. Mikroprozessorchips 4 bzw. 4' haben gleiche Daten gespeichert und weisen die gleiche Struktur auf. Ein Teil der Erkennungsmarke ist wiederum mit Löchern 5 für eine Halskette versehen. Visuell lesbar können zum Beispiel die Personenkennziffer PKZ, die Blutgruppe A Rh+, der Namen und die Nation NN sein.

In Fig. 2c ist wiederum eine Erkennungsmarke dargestellt, die außer dem Speicherchip 4 und den Löchern 5 noch eine Antenne 8 für kontaktloses Schreiben bzw. Lesen oder zur Abgabe besonderer Rufe aufweist. Die in Fig. 2c dargestellte Erkennungsmarke ist vorliegend ohne Sollbruchstelle dargestellt und dient lediglich als Beispiel für weitere, auf der Karte aufgebrachte Daten. Der Namen, die Nation NN und die Personenkennziffer PKZ sowie die Blutgruppe A Rh+ sind wiederum mittels visuell lesbarer Hoch- oder Tiefprägung bzw. mittels Laser unzerstörbar eingebracht.

In Fig. 2d ist eine Erkennungsmarke mit einer diagonal verlaufenden Sollbruchstelle 7 dargestellt, wobei wieder beide Teile mit identischen Chips 4 bzw. 4' ausgestattet sind. Beide Teile weisen außerdem wieder visuell lesbare Daten auf, wie zum Beispiel Name, Nation NN, Personenkennziffer PKZ und die Blutgruppe A Rh+. Eine Seite besitzt auf der Rückseite einen optisch oder magnetisch codierbaren Streifen, in dem zum Beispiel die Personenkennziffer PKZ maschinenlesbar gespeichert werden kann.

In Fig. 2e ist eine Erkennungsmarke mit waagerecht verlaufender Sollbruchstelle 7 dargestellt. Bei dieser Variante weist nur ein Teil der Erkennungsmarke einen Speicher- bzw. Prozessorchip 4 auf. Auf der anderen Seite sind entweder ein Teil oder alle in dem Speicher- bzw. Mikroprozessorchip gespeicherten Daten und Informationen visuell lesbar eingebracht.

Es muß hier bemerkt werden, daß die in den Fig. 2a-e gezeigten Ausführungsbeispiele für Erkennungsmarken nur die grundsätzlichen Ausführungsformen zeigen. Es sind alle Modikfikationen und/oder Kombinationen der dargestellten Ausführungsbeispiele ohne weiteres denkbar, so zum Beispiel auch das Aufbringen einer Antenne 8 und eines eventuell erforderlichen Senders bzw. Empfängers auf einer Seite einer Erkennungsmarke, die mit einer Sollbruchstelle 7 ausgerüstet ist.

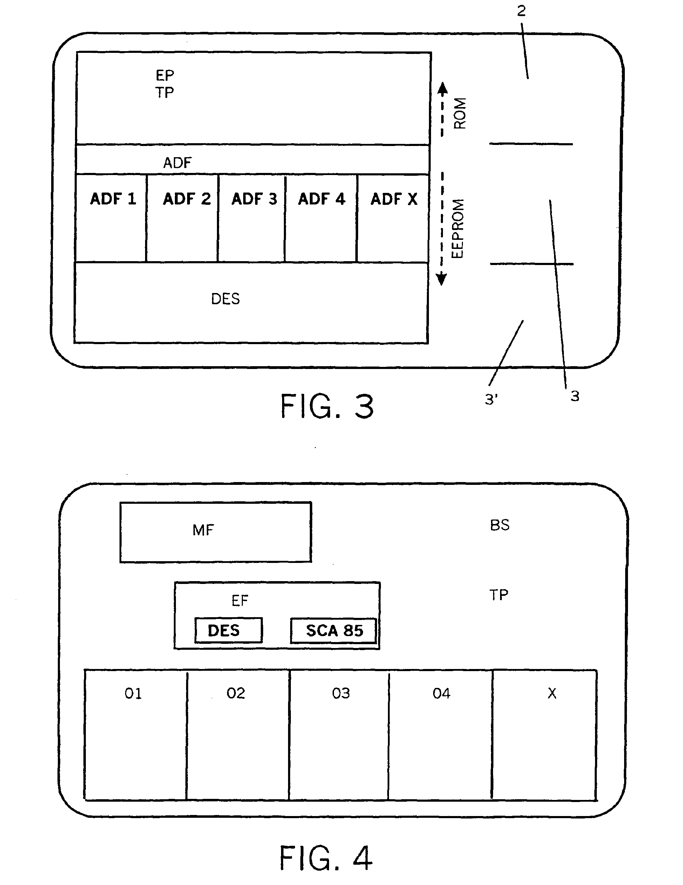

In Fig. 3 ist der funktionelle Aufbau der elektronischen Erkennungsmarke bzw. -karte gezeigt.

In ihr ist eine Eröffnungsprozedur EP, ein Übertragungsprotokoll bzw. Transportprotokoll TP in einem Nur-Lesespeicher ROM 2 abgespeichert. Dieser Teil der elektronischen Erkennungsmarke ist der allgemeine Teil, während die Anwendungsdatenfelder ADF sich im Anwendungsteil mit den beispielhaften Anwendungen eines Lese/Schreibspeichers 3 befinden, der als EEPROM ausgebildet sein kann. Zu diesem Zweck sind mehrere Anwendungsfelder ADF1 bis ADFX vorhanden. Der Lese-/Schreibspeicher besitzt noch einen Teil 3' zur Aufnahme des/der Sicherheitsverfahren DES; dieser Teil ist der Sicherheitsbereich der Erkennungsmarke.

Es muß bemerkt werden, daß der in Fig. 3 dargestellte funktionelle Aufbau der elektronischen Erkennungsmarke bzw. - karte dann zweimal vorhanden sein kann, wenn diese Erkennungsmarke bzw. -karte wie in den meisten Fällen mit einer Sollbruchstelle 7 versehen ist und zwei identisch gleiche Teile einer Erkennungsmarke bzw. -karte vorhanden sind.

In Fig. 4 ist eine prinzipielle Speicherstruktur der elektronischen Erkennungsmarke bzw. -karte gezeigt. Sie besitzt einen Speicherbereich für den Masterfile MF, das Chipkartenbetriebssystem sowie einheitliche Kommunikationsprotokolle. Außerdem ist ein Speicherbereich für elementare Datenfelder EF vorhanden und ein weiteres Speicherfeld für das Sicherheitssystem DES bzw. -verfahren SCA85. Außerdem sind Speicherbereiche 01 bis 05 oder auch mehr vorhanden, die bestimmten Applikationen zugeordnet sind. So kann zum Beispiel der Speicherbereich 01 der Ausbildung, der Speicherbereich 02 den Zugangsbedingungen, der Speicherbereich 03 medizinischen Daten, der Speicherbereich 04 veränderbaren Daten und der Speicherbereich 05 Fähigkeiten zugeordnet werden.

Die in der vorliegenden Erkennungsmarke bzw. -karte gespeicherten Daten sind mittels Kontakten in der bekannten Art und Weise mit Kartenlesern auslesbar; sie sind veränderbar und können mit einem geeigneten Gerät wieder in den jeweiligen Speicher zurückgeschrieben werden, wenn es erforderlich ist. Teile der Daten können in Speicherbereichen, wie beschrieben, abgelegt werden, die nur lesbar und somit nach dem erstmaligen Beschreiben unveränderbar sind. Sie eignen sich zum Beispiel für die Personenkennziffer PKZ und die Blutgruppe A Rh+, wie zum Beispiel in Fig. 1 dargestellt.

Aufgrund der besonderen Umgebungsbedingungen und Anforderungen an den in Aussicht genommenen Personenkreis ist der Speicher- bzw. Mikroprozessorchip 4 in einer Ausführungsform so auszulegen, daß die Daten auch kontaktlos geschrieben und gelesen werden können. So können die Träger einer solchen Erkennungsmarke bzw. -karte mit einem geeigneten Erfassungsgerät berührungslos erfaßt und zum Beispiel gezählt werden. Das ist dann besonders von Vorteil, wenn zum Beispiel viele Personen verletzt sind und die medizinische Versorgung organisiert werden muß. Es muß nocheinmal betont werden, daß die vorliegende Erfindung mit einer Karte realisierbar ist, bei der alle oder ausgewählte Daten visuell lesbar sind und/oder der Datenträger optisch oder magnetisch codiert ist. Ferner besteht die Realisierung darin, daß die Erkennungsmarke bzw. -karte mit einer Sollbruchstelle versehen ist und der Datenträger bzw. Speicher (Chip, Magnetstreifen, Hologramm) sich nur auf einem oder auf beiden Teilen der Karte befindet. Wichtig ist, daß das Material für die Erkennungsmarke bzw. -karte sehr widerstandsfähig gegen äußere Einwirkungen ist und deshalb vorteilhaft aus widerstandsfähigen Kunststoff, aus Keramik oder aus besonderem Glas, insbesondere Mehrschichtglas, besteht. Für Such- und Rettungszwecke ist die elektronische Erkennungsmarke bzw. - karte auch mit einem Sender für visuelle oder hörbare Ortung, zum Beispiel durch Erzeugen eines bestimmten Tones im hörbaren oder nicht hörbaren Bereich, ausgerüstet. **Liste der Bezugszeichen**
- 1: gestrichelte Linie
- 2: Festspeicher bzw. Nur-Lesespeicher ROM
- 3,3': Lese-/Schreibspeicher EEPROM
- 4,4': Speicher- bzw. Mikroprozessorchip
- 5: Löcher für eine Halskette
- 6: optisch oder magnetisch codierbarer Streifen
- 7: Sollbruchstelle
- 8: Antenne für kontaktloses Schreiben/Lesen
- 01-05: Applikationsfelder
- MF: Hauptverzeichnis
- DF: Unterverzeichnisse
- EF: Datenfelder
- AC: Zugangsbedingungen
- TP: Transportprotokoll
- DES: Sicherheitssystem
- CDO: Kommando
- AC: Datenfeld
- BS: Betriebssystem
- N: Nation
- NN: Namen und Nation
- A Rh+: Blutgruppe
- PKZ: Personenkennziffer
- ADF1-ADFX: Anwendungsfelder
- EP: Eröffnungsprozedur
- SCA 85: Sicherheitsverfahren

## Patentansprüche

1. Erkennungsmarke bzw. -karte für Personen mit Kompatantenstatus des Militärs, der Miliz, der Gendarmerie, des Grenzschutzes, des Heimatschutzes, des Bergrettungsdienstes u.s.w., wobei die Erkennungsmarke bzw. -karte entweder in Chipkartenform oder Erkennungsmarkenform ausgebildet ist und die Erkennungsmarke bzw. -karte aus zwei Teilen aus widerstandsfähigem Material besteht, die an einer Sollbruchstelle (7) voneinander trennbar sind und ein Teil der Erkennungsmarke bzw. -karte mit Löchern (5) für eine Halskette versehen ist, **dadurch gekennzeichnet, dass** mindestens einer der beiden Teile der Erkennungsmarke bzw. -karte einen elektronischen Speicher- und/oder einen Mikroprozessor- bzw. Logikchip (4, 4') zur Speicherung von personenbezogenen Daten und/oder Informationen aufweist und dass zumindest Teile der nicht visuell gespeicherten Daten visuell lesbar auf bzw. in beide Teile auf- bzw. eingebracht sind und dass die Erkennungsmarke bzw. -karte mit einem Sender für visuelle oder hörbare Ortung ausgerüstet ist.

2. Elektronische Erkennungsmarke bzw. -karte nach Patentanspruch 1, **dadurch gekennzeichnet,**
**daß** die elektronisch gespeicherten Daten bzw. Informationen in dem Speicher- bzw. Mikroprozessorchip (4 bzw. 4') kontaktlos bzw. über Kontakte an der Erkennungsmarke oder dem Speicher- bzw. Mikroprozessorchip (4, 4') lesbar bzw. einschreibbar sind.

3. Elektronische Erkennungsmarke bzw. -karte nach einem der Patentansprüche 1 oder 2, **dadurch gekennzeichnet,**
**daß** die Sollbruchstelle (7) senkrecht, waagrecht, diagonal, wellenförmig, zick-zack-förmig oder mäanderförmig ausgebildet ist.

4. Elektronische Erkennungsmarke bzw. -karte nach einem der Patentansprüche 1 bis 3, **dadurch gekennzeichnet,**
**daß** die visuell dargestellten und wahrnehmbaren Zeichen, Daten und Informationen maschinenlesbare Hoch- oder Tiefprägungen bzw. Lasereintragungen auf der vorder- und/oder Rückseite mindestens eines Teils der elektronischen Erkennungsmarke bzw. -karte aufgebracht bzw. eingebracht sind.

5. Elektronische Erkennungsmarke bzw. -karte nach einem der Patentansprüche 1 bis 4, **dadurch gekennzeichnet,**
**daß** beide Teile der elektronischen Erkennungsmarke bzw. -karte spiegelbildlich ausgebildet und aufgebaut sind und völlig gleichstrukturierte Speicher- bzw. Mikroprozessorchips (4 bzw. 4') aufweisen.

6. Elektronische Erkennungsmarke bzw. -karte nach einem der Patentansprüche 1 bis 5, **dadurch gekennzeichnet,**
**daß** sie aus widerstandsfähigen Kunststoff, Glas, Keramik oder einem ähnlichen Material besteht und
**daß** der jeweilige Datenträger bzw. -speicher mit oder ohne Intelligenz in Form eines Chips (4, 4'), eines optisch oder magnetisch codierbaren Streifens (6) oder Hologramms in das Material eingebettet, integriert bzw. implantiert ist.

7. Elektronische Erkennungsmarke bzw. -karte nach einem der Patentansprüche 1 bis 6, **dadurch gekennzeichnet,**
**daß** mindestens ein Teil der elektronischen Erkennungsmarke bzw. -karte ein Hauptverzeichnis (MF) für globale Kartendaten wie Personalkennziffern (PKZ), Nation, Name (NN) und Blutgruppe (A Rh+) enthält,
**daß** das Hauptverzeichnis (MF) mit Unterverzeichnissen (DF) zum Speichern besonderer Befähigungen und Ausbildung der betreffenden Person aufweist,
**daß** außerdem besondere Datenfelder des Hauptverzeichnisses (MF), zum Beispiel für Zugangsberechtigungen bzw. -bedingungen (AC), aufweisen und
**daß** Unterverzeichnisse (DF) ihrereseits wiederum über bestimmte Zugangsbedingungen (AC) mit bestimmten Datenfeldern (EF) und Speicherbereichen (01-05) für Anwendungen verbunden sind.

8. Elektronische Erkennungsmarke bzw. -karte nach einem der Patentansprüche 1 bis 7, **dadurch gekennzeichnet,**
**daß** zur Steuerung und Übertragung ein Betriebssystem (BS), ein Transportprotokoll (TP), ein Sicherheitssystem bzw. -verfahren (DES, SCA 85) in einem Speicher ROM (2) gespeichert ist, der als Teil des Speicher- bzw. Mikroprozessorchips (4 oder 4') ausgebildet ist und
**daß** außerdem ein Anwendungsbereich (ADF) mit dem Hauptspeicherverzeichnis (MF), den Unterverzeichnissen (DF), Datenfeldern (EF) und Zugangsbedingungen (AC) in einem als Lese-/Schreibspeicher (3, 3'), insbesondere EEPROM, gespeichert sind, der ebenfalls Teil des Speicher- bzw. Mikroprozessorchips (4 bzw. 4') ist.

9. Elektronische Erkennungsmarke bzw. -karte nach Patentanspruch 8, **dadurch gekennzeichnet,**
**daß** Speicherbereiche (01 - 05) im Speicher vorhanden sind, die bestimmten Applikationen zugeordnet sind.

10. Elektronische Erkennungsmarke bzw. -karte nach einem der Patentansprüche 1 bis 9, **dadurch gekennzeichnet,**
**daß** festlegbare Datenfelder und/oder -anwendungsbereiche bzw. Unterverzeichnisse und Zugangsbedingungen privilegiert über Kontakte oder kontaktlos und entsprechende Lese-/Schreibgeräte les-, lösch- bzw. umschreibbar ausgebildet sind.

## Claims

1. Identification tag or card for persons having combatant status in the military, militia, constabulary, border patrol, national security force, mountain rescue service, etc., wherein the identification tag or card is designed either in chip card form or in identification tag form and the identification tag or card consists of two parts made of robust material, which are separable from one another at a predetermined breaking point (7), and one part of the identification tag or card is provided with holes (5) for a neck chain, **characterized in that** at least one of the two parts of the identification tag or card has an electronic memory chip and/or microprocessor chip or logic chip (4, 4') for storing personal data and/or information, and **in that** at least parts of the non-visually stored data are applied on or incorporated in both parts in a visually readable manner, and **in that** the identification tag or card is equipped with a transmitter for visual or audible location.

2. Electronic identification tag or card according to claim 1, **characterized in that**
the electronically stored data or information in the memory chip or microprocessor chip (4, 4') can be read or written in a contactless manner or through contacts on the identification tag or the memory chip or microprocessor chip (4, 4').

3. Electronic identification tag or card according to any one of claims 1 and 2,
**characterized in that**
the predetermined breaking point (7) is vertical, horizontal, diagonal, undulating, zigzag, or serpentine in design.

4. Electronic identification tag or card according to any one of claims 1 through 3, **characterized in that**
the visually displayed and perceptible symbols, data, and information are applied onto or incorporated into at least one part of the electronic identification tag or card as machine-readable embossing or stamping or laser marking on the front and/or back.

5. Electronic identification tag or card according to any one of claims 1 through 4, **characterized in that**
the two parts of the electronic identification tag or card are designed and constructed as mirror images and have memory chips or microprocessor chips (4 or 4') that are structured completely identically.

6. Electronic identification tag or card according to any one of claims 1 through 5, **characterized in that**
it is made of robust plastic, glass, ceramic, or a similar material, and **in that** the respective data carrier or memory is embedded, integrated, or implanted in the material with or without intelligence in the form of a chip (4, 4'), an optically or magnetically codable stripe (6), or a hologram.

7. Electronic identification tag or card according to any one of claims 1 through 6, **characterized in that**
at least one part of the electronic identification tag or card contains a root directory (MF) for global card data such as personal identification numbers (PKZ), nation, name (NN), and blood group (A Rh+),
**in that** the root directory (MF) has subdirectories (DF) for storage of special abilities and training of the relevant person,
**in that**, additionally, special data fields of the root directory (MF) are present, for example for access authorizations or conditions (AC), and
**in that** subdirectories (DF) are in turn associated through specific access conditions (AC) with specific data fields (EF) and memory areas (01-05) for applications.

8. Electronic identification tag or card according to any one of claims 1 through 7, **characterized in that,**
for control and transmission, an operating system (BS), a transport protocol (TP), a security system or method (DES, SCA 85) are stored in a ROM memory (2) that is designed as part of a memory chip or microprocessor chip (4 or 4'), and
**in that**, in addition, an application area (ADF) is stored with the root directory, subdirectories, (DF), data fields (EF), and access conditions (AC) in a memory (3, 3') designed as read/write, in particular as an EEPROM, that is likewise part of the memory chip or microprocessor chip (4, 4').

9. Electronic identification tag or card according to claim 8, **characterized in that**
memory areas (01-05) that are assigned to specific applications are present in the memory.

10. Electronic identification tag or card according to any one of claims 1 through 9, **characterized in that**
specifiable data fields and/or data application areas or subdirectories and access conditions are designed to be readable, erasable, and rewritable in a privileged manner through contacts or in a contactless manner by means of appropriate read/write devices.

## Revendications

1. Plaque ou carte d'identité destinée à des personnes ayant le statut de combattant de l'armée, de la milice, de la gendarmerie, de la police de l'air et des frontières, de la force de protection du territoire, de sauvetage en montage, etc., la plaque ou la carte d'identité étant réalisée sous la forme d'une carte à puce ou d'une plaque d'identité, et la plaque ou la carte d'identité consistant en deux parties en matière résistante, séparables au niveau d'une zone de rupture (7), et une partie de la plaque ou de la carte d'identité étant munie de trous (5) destinés à une chaîne se portant autour du cou, **caractérisée en ce qu'**au moins l'une des deux parties de la plaque ou de la carte d'identité comprend une puce mémoire électronique et/ou une puce microprocesseur ou logique (4, 4') destinée à l'enregistrement de données et/ou d'informations relatives à la personne et **en ce qu'**au moins des parties des données enregistrées non visuellement sont placées sur ou dans les deux parties de manière visuellement lisible et **en ce que** la plaque ou la carte d'identité est munie d'un émetteur destiné à la localisation visuelle ou auditive.

2. Plaque ou carte d'identité électronique selon la revendication 1, **caractérisée en ce que** les données ou informations enregistrées électroniquement sont lisibles ou inscriptibles, dans la puce mémoire ou microprocesseur (4 ou 4'), sans contact ou via des contacts sur la plaque d'identité ou la puce mémoire ou microprocesseur (4, 4').

3. Plaque ou carte d'identité électronique selon l'une des revendications 1 ou 2,
**caractérisée**
**en ce que** la zone de rupture (7) est réalisée verticalement, horizontalement, en diagonale, de manière ondulée, en zigzag ou en méandres.

4. Plaque ou carte d'identité électronique selon l'une des revendications 1 à 3,
**caractérisée**
**en ce que** les caractères, données et informations représentées et perceptibles visuellement sont placées sur ou dans la face avant et/ou la face arrière d'au moins une partie de la plaque ou de la carte d'identité électronique sous la forme de gaufrages en relief ou en creux ou encore d'inscriptions laser lisibles par machine.

5. Plaque ou carte d'identité électronique selon l'une des revendications 1 à 4,
**caractérisée**
**en ce que** les deux parties de la plaque ou de la carte d'identité électronique sont réalisées et aménagées de manière symétrique et présentent des puces mémoires ou microprocesseurs (4 ou 4') de structure entièrement identique.

6. Plaque ou carte d'identité électronique selon l'une des revendications 1 à 5,
**caractérisée**
**en ce qu'**elle est réalisée dans une matière plastique résistante, en verre, en céramique ou toute autre matière similaire et
**en ce que** le support de données ou la mémoire de données, intelligent(e) ou non, est incorporé(e), intégré(e) ou implanté(e) dans la matière sous la forme d'une puce (4, 4'), d'une bande (6) à codage optique ou magnétique ou d'un hologramme.

7. Plaque ou carte d'identité électronique selon l'une des revendications 1 à 6,
**caractérisée**
**en ce qu'**au moins une partie de la plaque ou de la carte d'identité électronique contient un répertoire principal (MF) destiné aux données globales de la carte, telles que le numéro d'identification personnel (PKZ), la nationalité, le nom (NN) et le groupe sanguin (A Rh+),
**en ce que** le répertoire principal (MF) comporte des sous-répertoires (DF) destinés à l'enregistrement d'habilitations particulières et de données relatives à la formation de la personne concernée,
**en ce que**, en plus, des champs particuliers de données du répertoire principal (MF), par exemple destinés aux autorisations ou conditions d'accès (AC), sont présents et
**en ce que** des sous-répertoires (DF) sont reliés à certains champs de données (EF) et zones de mémoires (01-05) pour applications moyennant des conditions d'accès (AC) déterminées.

8. Plaque ou carte d'identité électronique selon l'une des revendications 1 à 7,
**caractérisée**
**en ce que,** pour la commande et la transmission, un système d'exploitation (BS), un protocole de transport (TP), un système ou une procédure de sécurité (DES, SCA 85) sont enregistrés dans une mémoire ROM (2) qui fait partie de la puce mémoire ou microprocesseur (4 ou 4'), et
**en ce qu'**une zone d'application (ADF) comportant le répertoire mémoire principal (MF), les sous-répertoires (DF), les champs de données (EF) et les conditions d'accès (AC), est enregistrée dans une mémoire à lecture/écriture (3, 3'), notamment dans une EEPROM qui fait également partie de la puce mémoire ou du microprocesseur (4 ou 4').

9. Plaque ou carte d'identité électronique selon la revendication 8, **caractérisée**
**en ce que** la mémoire comporte des zones de mémoire (01 - 05) associées à des applications déterminées.

10. Plaque ou carte d'identité électronique selon l'une des revendications 1 à 9,
**caractérisée**
**en ce que** des champs et/ou zones d'applications de données ou des sous-répertoires et des conditions d'accès définissables sont réalisés lisibles, effaçables ou modifiables, de manière privilégiée, via des contacts ou sans contact et des dispositifs correspondants de lecture/écriture.
